# EUROPÄISCHE PATENTANMELDUNG

(11) **EP 4 456 370 A1**
(43) Veröffentlichungstag der Anmeldung: **30.10.2024**
(21) Anmeldenummer: 23169484.5
(22) Anmeldetag: 24.04.2023
(51) Int. Cl.: H02J 7/00, B60L 53/65, B60L 53/66, B60L 53/67, B60L 53/68

(54) **LADEGERÄTE-MANAGEMENTSYSTEM UND VERFAHREN ZUM BETREIBEN VON LADEGERÄTEN**

(71) Anmelder: Fronius International GmbH, 4643 Pettenbach (AT)
(72) Erfinder: Brandstätter, Stefan, 4643 Pettenbach (AT); Brandmayr, Stephan, 4643 Pettenbach (AT); Maier, Martin, 4643 Pettenbach (AT); Auer, Martin, 4643 Pettenbach (AT)
(74) Vertreter: Bratovic, Nino Maria

(57) **Zusammenfassung**

Die Erfindung schafft ein Ladegeräte-Managementsystem, LMS (100), sowie ein Verfahren zum Betreiben mindestens eines Ladegeräts (10). Das LMS (100) umfasst:
eine zentrale Recheneinrichtung, ZRE (110), umfassend zumindest eine Ladeanfrage-Schnittstelle, LASS (114), ein Steuermodul (116) und eine Ladegeräte-Schnittstelle, LGSS (112);
wobei die LASS (114) dazu eingerichtet ist, zumindest eine Ladeanfrage sowie einen Datensatz bezüglich einer beliebigen zu ladenden automatisierten mobilen Einheit, AME (20), einer Mehrzahl von AMEs (20), welche zumindest teilweise unterschiedliche Soll-Ladekennlinien aufweisen, zu empfangen; wobei das Steuermodul (116) dazu eingerichtet ist, Steueranweisungen basierend auf dem empfangenen Datensatz zu erzeugen und mittels LGSS (112) an ein Ladegerät (10) zu übermitteln, um das entsprechende Ladegerät (10) zu steuern, die zu ladende AME (20) gemäß einer Soll-Ladekennlinie der zu ladenden AME (20) zu laden.

## Beschreibung

### Gebiet der Erfindung

Die Erfindung betrifft ein Ladegeräte-Managementsystem, d.h. ein System zum Verwalten ("managen") von Ladegeräten sowie ein Verfahren zum Verwalten von Ladegeräten, jeweils insbesondere für das Laden von Flotten von automatisierten mobilen Einheiten mit unterschiedlichen Einheitenkonfigurationen (so genannten "Mischflotten").

### Technischer Hintergrund

Automatisierte mobile Einheiten, AME, darunter zum Beispiel automatisierte gesteuerte Fahrzeuge (engl. "automated guided vehicles", AGV), autonome mobile Roboter (engl. "autonomous mobile robots", AMR), oder unbemannte Luftfahrzeuge (engl. "unmanned aerial vehicles", UAV, so genannte "Drohnen"), werden immer häufiger und zahlreicher eingesetzt. In modernen hochautomatisierten intelligenten Fabriken oder Werkhallen sind mitunter zahlreiche automatisierte mobile Einheiten gleichzeitig im Einsatz.

Die automatisierten mobile Einheiten sind üblicherweise mit einem Elektromotor, einer Batterie und einem Ladeanschluss versehen. Geht der Ladezustand der Batterie einer automatisierten mobilen Einheit zur Neige, kann sie über ihren Ladeanschluss mit einem Ladegerät verbunden und geladen werden. Das Laden erfolgt dabei gemäß einer Vielzahl von Parametern, deren Gesamtheit hierin als "Ladekennlinie" bezeichnet wird. Eine Ladekennlinie kann insbesondere Werte für Strom und Spannung aufweisen (darunter Minimalwerte, Maximalwerte, Idealwerte etc.), bevorzugt im zeitlichen Verlauf, und optional in Abhängigkeit von zusätzlichen Variablen wie beispielsweise einer Temperatur der Batterie oder dergleichen. Elemente der Ladekennlinien werden mitunter auch als Ladeparameter, Ladesetting und/oder Ladecharakteristik bezeichnet.

Soll-Ladekennlinien von automatisierten mobilen Einheiten, also Ladekennlinien, welche für die automatisierten mobilen Einheiten bevorzugt (oder teilweise sogar ausschließlich) zu verwenden sind, können sich von Hersteller zu Hersteller, von Baureihe zu Baureihe, und selbst von Generation zu Generation innerhalb einer Baureihe unterscheiden. Die Gesamtheit aus Hersteller, Baureihe, und Generation einer automatisierten mobilen Einheit, wird hierin auch als "Einheitenkonfiguration" bezeichnet. Somit kann jede Einheitenkonfiguration einer unterschiedlichen Soll-Ladekennlinie zugeordnet sein.

Damit sichergestellt ist, dass alle automatisierten mobilen Einheiten, welche in einer Lokalität verwendet werden, auch gemäß einer Soll-Ladekennlinie (oder zumindest einer brauchbaren Ladekennlinie) geladen werden können, wird jede solche Lokalität herkömmlicherweise mit einer Vielzahl von Ladegeräten eingerichtet, und zwar je ein Ladegerät für jede vorhandene Einheitenkonfiguration. Selbst wenn nur unterschiedliche Baureihen oder Generationen ein und desselben Herstellers verwendet werden, kann bereits eine größere Anzahl von verschiedenen Ladegeräten notwendig sein. Diese Anzahl kann sich vervielfachen, wenn automatisierte mobile Einheiten mehrerer Hersteller verwendet werden. Der benötigte Aufwand für eine Minimalkonfiguration zum Betreiben und Verwalten (insbesondere: zum Laden) einer solchen "Mischflotte" von automatisierten mobilen Einheiten ist daher groß, und es besteht wenig Redundanz, wobei viele Ladegeräte gleichzeitig einen großen Teil der Zeit unbenutzt bleiben.

### Zusammenfassung der Erfindung

Nach all dem Vorangehenden ist es daher eine Aufgabe der vorliegenden Erfindung, ein verbessertes Ladegeräte-Managementsystem sowie ein verbessertes Verfahren zum Betreiben mindestens eines Ladegeräts bereitzustellen.

Diese Aufgaben werden durch die Gegenstände der unabhängigen Patentansprüche gelöst.

Dementsprechend wird gemäß einem ersten Aspekt der Erfindung ein Ladegeräte-Managementsystem, LMS, bereitgestellt, welches eine zentrale Recheneinrichtung, ZRE, aufweist, welche zumindest eine Ladeanfrage-Schnittstelle, LASS, ein Steuermodul und eine Ladegeräte-Schnittstelle, LGSS, umfasst.

Die Ladeanfrage-Schnittstelle, LASS, ist dazu eingerichtet, zumindest eine Ladeanfrage sowie einen Datensatz bezüglich einer beliebigen zu ladenden automatisierten mobilen Einheit, AME, einer Mehrzahl von automatisierten mobilen Einheiten, AME, welche zumindest teilweise unterschiedliche Soll-Ladekennlinien aufweisen (oder: erfordern, oder: verlangen), zu empfangen. Bei der Mehrzahl von automatisierten mobilen Einheiten, AME, kann es sich insbesondere um solche AMEs handeln, welche von einem gemeinsamen Mobile-Einheiten-Management-System gesteuert werden und/oder welche an derselben Lokalität, z.B. einer Werkhalle oder einem Logistikzentrum oder einer durch ein Intranet ohne Benutzung des Internet verbundenen Lokalität, eingebunden sind.

Die AMEs können insbesondere unbemannte automatisierte mobile Einheiten, UAME, sein.

Das Steuermodul der zentralen Recheneinrichtung, ZRE, ist dazu eingerichtet, Steueranweisungen basierend auf dem empfangenen Datensatz zu erzeugen und mittels der Ladegeräte-Schnittstelle, LGSS, an ein Ladegerät zu übermitteln, um das entsprechende Ladegerät zu steuern, die zu ladende automatisierte mobile Einheit, AME, gemäß einer Soll-Ladekennlinie der zu ladenden automatisierten mobilen Einheit, AME, zu laden.

Das Ladegerät (bevorzugt jedes Ladegerät des LMS, oder jedes Ladegerät, welches mit dem LMS ansteuerbar ist) ist dabei vorteilhaft dazu ausgelegt, jede Soll-Ladekennlinie der unterschiedlichen Soll-Ladekennlinien der Mehrzahl von automatisierten mobilen Einheiten, AME, bereitzustellen, rein aufgrund der (softwäremäßigen) Steuerung durch die Steueranweisungen.

Im Vorangehenden und im Folgenden werden Begriffe mitunter mit Akronymen abgekürzt, etwa "AME" für "automatisierte mobile Einheit" oder "LMS" für "Ladegeräte-Managementsystem". Üblicherweise wird die Langfassung verwendet, gefolgt von dem zugehörigen Akronym. In manchen Fällen wird jedoch, um die Lesbarkeit zu verbessern, lediglich das Akronym verwendet werden, während in anderen Fällen auf das Akronym verzichtet wird. Akronym und Langfassung sollen in jedem Fall gleichbedeutend sein.

Unter einer Ladeanfrage ist insbesondere eine Information zu verstehen, dass eine automatisierte mobile Einheit Ladung ihrer Batterie anfordert, d.h. anfordert, geladen zu werden. Die Ladeanfrage kann von der automatisierten mobilen Einheit selbst und/oder von dem Mobile-Einheit-Management-System ausgehen, welches die automatisierte mobile Einheit steuert (oder: verwaltet, oder: betreibt).

Der Datensatz enthält insbesondere eine Information, welche es ermöglicht, darauf basierend eine Soll-Ladekennlinie für die zu ladende automatisierte mobile Einheit zu bestimmen. In einem einfachen Fall kann der Datensatz die Soll-Ladekennlinie bereits umfassen. Der Datensatz kann auch einen Identifikationscode enthalten, welcher durch eine Datenbank mindestens einer Soll-Ladekennlinie zugeordnet wird.

In manchen Varianten weisen die automatisierten mobilen Einheiten, AME, jeweils nur genau eine einzige Soll-Ladekennlinie auf, nämlich die jeweils optimale Ladekennlinie für diese AME. Es kann aber auch vorgesehen sein, dass eine, mehrere, oder alle der AMEs mehr als eine Soll-Ladekennlinie aufweisen, wobei eine jeweils passende Soll-Ladekennlinie dann aus den vorhandenen ausgewählt werden kann, beispielsweise durch das Steuermodul der zentralen Recheneinrichtung des Ladegeräte-Managementsystems.

Unter "einer beliebigen zu ladenden automatisierten mobilen Einheit" soll verstanden werden, dass jede automatisierte mobile Einheit der Mehrzahl von automatisierten mobilen Einheiten eine Ladeanfrage stellen kann, und dass das Ladegeräte-Managementsystem dazu eingerichtet ist, jede dieser Ladeanfragen behandeln zu können.

Die vorliegende Erfindung ermöglicht es somit vorteilhaft, bestehende Flotten von automatisierten mobilen Einheiten, AME, beliebiger Einheitenkonfiguration, mit einem einzigen Ladegerät oder einer (vorzugsweise geringen) Anzahl von (bevorzugt gleich ausgebildeten) Ladegeräten zu laden, und zwar jeweils gemäß deren Soll-Ladekennlinie. Betreiber von Flotten von automatisierten mobilen Einheiten, insbesondere von Mischflotten, können somit auf die bisher übliche Vielzahl von Ladegeräten unterschiedlicher Bauweise verzichten. Damit kann insbesondere auch die Gesamtzahl der Ladegeräte verringert werden, da in der Kapazitätsplanung ein einzelnes Ladegerät für eine Vielzahl von automatisierten mobilen Einheiten, AME, eingeplant werden kann. Dies spart nicht nur Platz und schafft kostengünstig Redundanz, sondern verringert auch den Aufwand bei Wartungsarbeiten, den Aufwand für Schulungen und dergleichen mehr.

Darüber hinaus eröffnet das erfindungsgemäße Ladegeräte-Managementsystem einem Flottenbetreiber die einfache Möglichkeit, einer bestehenden Flotte eine automatisierte mobile Einheit, AME, hinzuzufügen, praktisch ohne Rücksicht darauf, ob diese ein spezielles Ladegerät benötigt, um eine zugehörige Ladekennlinie bereitzustellen.

Wann immer hierin von einer Schnittstelle oder einem Modul die Rede ist, so kann die Schnittstelle bzw. das Modul in Hardware und/oder in Software realisiert sein. Dabei muss das Modul bzw. die Schnittstelle nicht zwangsläufig als ein separater Code-Bestandteil oder eine separate Hardware-Einheit realisiert sein, sondern kann auch über mehrere Code-Bestandteile und/oder Hardware-Einheiten verstreut und/oder mit anderen Schnittstellen oder Modulen verwoben oder (ganz oder teilweise) integriert sein. Beispielsweise können sämtliche Module in einem einzigen Computerprogrammcode realisiert sein. Die Schnittstelle bzw. das Modul kann somit durch ihre Funktionalität definiert sein, unabhängig von der konkreten Realisierung. Dasselbe gilt für Datenbanken, welche voneinander getrennt oder auch ineinander integriert ausgebildet sein können.

Weitere bevorzugte Ausführungsformen, Varianten und Weiterbildungen von Ausführungsformen ergeben sich aus den Unteransprüchen sowie aus der Beschreibung unter Bezugnahme auf die Figuren.

Gemäß einigen vorteilhaften Ausführungsformen, Varianten, oder Weiterentwicklungen von Ausführungsformen ist die Ladeanfrage-Schnittstelle, LASS, dazu ausgebildet, die Ladeanfrage sowie den Datensatz von einem Mobile-Einheit-Management-System, MEMS, zu erhalten, welches dazu eingerichtet ist, die Mehrzahl von automatisierten mobilen Einheiten, AEMs, zu steuern. Solche Mobile-Einheit-Management-Systeme, MEMS, sind vielfach bereits vorhanden, um eine vorhandene Flotte von AEMs zu betreiben. Die vorliegende Erfindung kann somit vorteilhaft in Kombination mit bestehenden Mobile-Einheit-Management-Systemen, MEMS, und bestehenden AMEs eingesetzt werden, um deren Handhabung und vor allem Ladung zu vereinfachen und somit einen Mehrwert zu schaffen.

Gemäß einigen vorteilhaften Ausführungsformen, Varianten, oder Weiterentwicklungen von Ausführungsformen weist der Datensatz einen Identifikationscode, ID, der zu ladenden automatisierten mobilen Einheit, AME, auf.

Die zentrale Recheneinrichtung, ZRE, kann weiterhin eine Ladekennlinien-Datenbank, LKDB, aufweisen, welche den Identifikationscode, ID, einer jeden der Mehrzahl von automatisierten mobilen Einheiten, AME, mindestens einer zugehörigen Soll-Ladekennlinie zuordnet. Anders ausgedrückt kann die Ladekennlinien-Datenbank, LKDB, für jede AME die erforderliche (oder: mindestens eine) Soll-Ladekennlinie kennen und angeben. Das Steuermodul kann dazu eingerichtet sein, die Steueranweisungen unter Verwendung der mindestens einen Soll-Ladekennlinie aus der Ladekennlinien-Datenbank zu erzeugen. Insbesondere kann das Steuermodul das Ladegerät anweisen, das Laden der zu ladenden AME gemäß der entsprechenden Soll-Ladekennlinie durchzuführen. Die Implementierung der Ladekennlinien-Datenbank, LKDB, in der zentralen Recheneinrichtung, ZRE, ist insbesondere deswegen vorteilhaft, weil die Ladekennlinien-Datenbank, LKDB, somit auch zentral implementiert und daher leicht erweiterbar oder aktualisierbar ist. Darüber hinaus muss nicht jede automatisierte mobile Einheit, AME, ihre eigene Soll-Ladekennlinie speichern, die mitunter sehr komplex sein kann, und es wird insgesamt der nötige Datenverkehr reduziert.

Es versteht sich jedoch, dass der Fachmann auch andere Optionen vorsehen kann, z.B. dezentralisierte Ladekennlinien-Datenbänke, welche in jedem Ladegerät einzeln implementiert sind oder dergleichen.

Gemäß einigen vorteilhaften Ausführungsformen, Varianten, oder Weiterentwicklungen von Ausführungsformen weist der Identifikationscode eine individuelle Seriennummer der zu ladenden automatisierten mobilen Einheit, AME, und/oder eine Typennummer der zu ladenden automatisierten mobilen Einheit, AME, auf. Die Ladekennlinien-Datenbank kann somit beispielsweise jeder individuellen Seriennummer bzw. jeder Typennummer eine Soll-Ladekennlinie zuordnen.

Gemäß einigen vorteilhaften Ausführungsformen, Varianten, oder Weiterentwicklungen von Ausführungsformen umfasst der Datensatz mindestens eine Soll-Ladekennlinie für die zu ladende automatisierte mobile Einheit, AME. Das Steuermodul kann dazu eingerichtet sein, die Steueranweisungen unter Verwendung der mindestens einen Soll-Ladekennlinie aus dem Datensatz zu erzeugen. Insbesondere kann das Steuermodul das Ladegerät anweisen, das Laden der zu ladenden AME gemäß der entsprechenden Soll-Ladekennlinie durchzuführen.

Gemäß einigen vorteilhaften Ausführungsformen, Varianten, oder Weiterentwicklungen von Ausführungsformen ist das Steuermodul dazu eingerichtet, das Laden der zu ladenden automatisierten mobilen Einheit, AME, nur dann freizugeben, wenn (beispielsweise über die Ladeanfrage-Schnittstelle, LASS) eine Freigabe des Mobile-Einheit-Management-Systems, MEMS, (oder: von dem MEMS) dazu empfangen wird. Diese Freigabe kann beispielsweise nur dann erfolgen, falls (und somit indizieren, dass) sich die zu ladende automatisierte mobile Einheit, AME, an einem Ladepunkt des Ladegeräts befindet (genauer: des Ladegeräts, welches die Steueranweisungen zum Laden der AME erhalten hat).

Zusätzlich können optional weitere derartige Sicherheitsüberprüfungen durchgeführt werden. Insbesondere können eine oder mehrere Informationen, welche dem MEMS über das Ladegeräte-Managementsystem, LMS, von dem Ladegerät übermittelt werden, mit einer oder mehreren Informationen, welche dem MEMS von einer AME übermittelt werden, verglichen werden, und darauf basierend eine Übereinstimmungsprüfung durchgeführt werden. Eine Freigabe wird beispielsweise nur bei positivem Ergebnis der Übereinstimmungsprüfung erteilt. Solche Informationen können beispielsweise die Position des Ladepunkts und die Position der AME (vermeintlich) an dem Ladepunkt betreffen, oder eine Ladegeräte-Kennung des Ladegeräts und/oder dergleichen mehr. Solche Sicherheitsüberprüfungen verringern oder eliminieren die Gefahr, dass durch eine falsche Zuordnung eine AME mit einer für sie nicht-optimalen, oder gar ungeeigneten, Ladekennlinie geladen wird.

Gemäß einigen vorteilhaften Ausführungsformen, Varianten, oder Weiterentwicklungen von Ausführungsformen ist das Steuermodul dazu eingerichtet, aus mehreren Soll-Ladekennlinien für die zu ladende automatisierte mobile Einheit, AME, eine auszuwählen und basierend auf dieser die Steueranweisungen zu erzeugen. Das an der Ladeanfrage-Schnittstelle, LASS, empfangene Signal kann Informationen enthalten, basierend auf welchen diese Auswahl erfolgt. Beispielsweise kann in dem Signal angegeben sein, dass eine besonders schnelle oder eine besonders schonende Ladung gewünscht ist. Darauf basierend kann das Steuermodul zwischen einer Soll-Ladekennlinie für schnelle Ladung und einer Soll-Ladekennlinie für schonende Ladung auswählen. Demnach kann die beschriebene Ladekennlinien-Datenbank mehrere Soll-Ladekennlinie für jede Einheitenkonfiguration enthalten.

Gemäß einigen vorteilhaften Ausführungsformen, Varianten, oder Weiterentwicklungen von Ausführungsformen umfasst das Ladegeräte-Managementsystem, LMS, mindestens ein Ladegerät, bevorzugt eine Mehrzahl von Ladegeräten, welche besonders bevorzugt identisch zueinander ausgebildet sind. Jedes Ladegerät umfasst vorteilhaft ein Kommunikationsmodul, welches zur bidirektionalen Kommunikation mit der Ladegeräte-Schnittstelle, LGSS, der zentralen Recheneinrichtung, ZRE, ausgebildet ist sowie eine Ladeelektronik, welche dazu ausgebildet ist, eine zu ladende automatisierte mobile Einheit, AME, basierend auf den von der Ladegeräte-Schnittstelle, LGSS, empfangenen Steueranweisungen zu laden.

Das Kommunikationsmodul kann an einer Außenseite des Ladegeräts angebracht, z.B. aufmontiert oder angeklebt, sein, und somit vorteilhaft nachrüstbar sein. Eine Datenverbindung zwischen der Ladelektronik und dem Kommunikationsmodul kann über einen Anschluss an dem Gehäuse des Ladegeräts hergestellt werden, beispielsweise unter Verwendung eines CAN-Bus. Alternativ kann das Kommunikationsmodul auch in ein Gehäuse des Ladegeräts integriert sein, wobei auch hier eine Kommunikation über einen CAN-Bus erfolgen kann. Das Kommunikationsmodul ist vorzugsweise zur Kommunikation über das ein lokales Netzwerk (z.B. Intranet) und/oder das Internet eingerichtet.

Gemäß einigen vorteilhaften Ausführungsformen, Varianten, oder Weiterentwicklungen von Ausführungsformen umfasst das Ladegeräte-Managementsystem, LMS, eine Mehrzahl von hardwaremäßig gleich ausgebildeten Ladegeräten, welche jeweils in der Lage sind, ein Laden gemäß jeder der unterschiedlichen Soll-Ladekennlinien der Mehrzahl von automatisierten mobilen Einheiten, AME, bereitzustellen. Auf diese Weise kann das Auswählen von für eine Ladeanfrage geeigneten Ladegeräten rein nach deren Position und Auslastung erfolgen, ohne darauf Rücksicht zu nehmen - wie es im Stand der Technik nötig ist - welche AME genau an welchem Ladegerät geladen werden kann. Mit anderen Worten erfolgt eine Anpassung der Ladekennlinie, mit welcher ein jedes Ladegerät eine jede AME lädt, vorteilhaft ausschließlich softwaremäßig durch die Steueranweisungen des Steuermoduls.

Gemäß einigen vorteilhaften Ausführungsformen, Varianten, oder Weiterentwicklungen von Ausführungsformen ist die zentrale Recheneinrichtung, ZRE, als ein Server, insbesondere cloud-basiert, implementiert. Dies ermöglicht es beispielsweise, mehrere Mobile-Einheit-Management-Systeme, MEMS, mit ein und demselben Ladegeräte-Managementsystem, LMS, zu koppeln. Darüber hinaus können Standard-Internet-Kommunikationsprotokolle für die Kommunikation zwischen Ladegerät und LMS sowie LMS und MEMS verwendet werden. Alternativ oder zusätzlich kann das LMS auch ein lokales Intranet der Lokalität, an welcher das MEMS installiert ist und die AMEs steuert, zur Kommunikation zwischen der ZRE und den Ladegeräten verwenden. Das LMS kann ein solches lokales Intranet umfassen.

Gemäß einem zweiten Aspekt schafft die Erfindung ein Verfahren (insbesondere ein computerimplementiertes Verfahren) zum Betreiben mindestens eines Ladegerätes, umfassend zumindest die Schritte:
Empfangen einer Ladeanfrage sowie eines Datensatzes bezüglich einer beliebigen zu ladenden automatisierten mobilen Einheit, AME, einer Mehrzahl von automatisierten mobilen Einheiten, AMEs, welche zumindest teilweise unterschiedliche Soll-Ladekennlinien aufweisen;
Ermitteln einer Soll-Ladekennlinie für das Laden der zu ladenden automatisierten mobilen Einheit, AME, basierend auf dem empfangenen Datensatz; und
Steuern eines Ladegeräts zum Laden der zu ladenden automatisierten mobile Einheit, AME, gemäß der ermittelten Soll-Ladekennlinie. Bevorzugt kann hierbei dasselbe Ladegerät (oder mindestens ein Ladegerät einer Mehrzahl von Ladegeräten) zum Laden verschiedener AMEs gemäß jeweils deren unterschiedlichen Soll-Ladekennlinien verwendet werden.

Gemäß einigen vorteilhaften Ausführungsformen, Varianten, oder Weiterentwicklungen von Ausführungsformen werden die Ladeanfrage und der Datensatz von einem Mobile-Einheit-Management-Systems, MEMS, empfangen, welches die Mehrzahl von automatisierten mobilen Einheiten, AMEs, steuert. Somit muss das Ladegeräte-Managementsystem, LMS, nicht mit den Protokollen jeder einzelnen AME kompatibel sein, sondern es wird genutzt, dass die Mobile-Einheit-Management-Systeme, MEMS, diese Kompatibilität ohnehin aufweisen müssen. Die Kommunikation zwischen MEMS und LMS kann beispielsweise unter Verwendung des Internets erfolgen.

Gemäß einigen vorteilhaften Ausführungsformen, Varianten, oder Weiterentwicklungen von Ausführungsformen weist der Datensatz einen Identifikationscode, ID, der zu ladenden automatisierten mobilen Einheit, AME, auf. Das Ermitteln der Soll-Ladekennlinie kann unter Verwendung einer Ladekennlinien-Datenbank, LKDB, erfolgen, welche den (jeweiligen) Identifikationscode, ID, einer jeden der Mehrzahl von automatisierten mobilen Einheiten, AME, mindestens einer zugehörigen Soll-Ladekennlinie (bevorzugt: genau einer zugehörigen Soll-Ladekennlinie) zuordnet.

Gemäß einigen vorteilhaften Ausführungsformen, Varianten, oder Weiterentwicklungen von Ausführungsformen ist mindestens eine automatisierte mobile Einheit, AME, der Mehrzahl von automatisierten mobilen Einheiten, AME, als ein automatisiertes gesteuertes Fahrzeug, als ein autonomer mobiler Roboter, oder als ein unbemanntes Luftfahrzeug (engl. unmanned aerial vehicle", UAV, sog. "Drohne") ausgebildet.

Gemäß einem weiteren Aspekt stellt die Erfindung ein Computerprogrammprodukt bereit, welches ausführbaren Programmcode umfasst, welcher dazu eingerichtet ist, wenn er ausgeführt wird (z.B. durch einen Computer bzw. eine Recheneinrichtung), das Verfahren gemäß einer Ausführungsform der vorliegenden Erfindung durchzuführen.

Gemäß einem weiteren Aspekt stellt die Erfindung ein computerlesbares, nicht-flüchtiges Datenspeichermedium bereit, welches ausführbaren Programmcode umfasst, welcher dazu eingerichtet ist, wenn er ausgeführt wird (z.B. durch einen Computer bzw. eine Recheneinrichtung), das Verfahren gemäß einer Ausführungsform der vorliegenden Erfindung durchzuführen. Bei dem Datenspeichermedium kann es sich beispielsweise um einen Festkörperspeicher, eine CD-ROM, eine DVD-ROM oder dergleichen handeln.

Gemäß einem weiteren Aspekt stellt die Erfindung einen Datenstrom bereit, welcher ausführbaren Programmcode umfasst oder dazu eingerichtet ist, ausführbaren Programmcode zu erzeugen, welcher dazu eingerichtet ist, wenn er ausgeführt wird (z.B. durch einen Computer bzw. eine Recheneinrichtung), das Verfahren gemäß einer Ausführungsform der vorliegenden Erfindung durchzuführen.

Gemäß einem weiteren Aspekt stellt die Erfindung eine Recheneinrichtung bereit, welche dazu eingerichtet ist, das Verfahren gemäß einer Ausführungsform der vorliegenden Erfindung durchzuführen. Bei der Recheneinrichtung kann es sich insbesondere um eine cloud-basierte Recheneinrichtung handeln. Die Recheneinrichtung kann eine oder mehrere CPUs und/oder eine oder mehrere GPUs aufweisen.

### Kurze Beschreibung der Figuren

Die Erfindung wird nachstehend anhand von Ausführungsbeispielen in den Figuren der Zeichnungen näher erläutert. Die teilweise schematisierte Darstellung zeigen hierbei:
- Fig. 1: ein schematisches Blockdiagramm zum Erläutern eines Ladegeräte-Managementsystem gemäß einer Ausführungsform der vorliegenden Erfindung;
- Fig. 2: eine beispielhafte Ladekennlinie zur Verwendung in dem Ladegeräte-Managementsystem gemäß Fig. 1;
- Fig. 3: ein schematisches Ablaufdiagramm zum Erläutern eines Verfahrens gemäß einer weiteren Ausführungsform der vorliegenden Erfindung;
- Fig. 4: ein schematisches Blockschaltbild zum Erläutern eines Computerprogrammprodukts gemäß einer weiteren Ausführungsform der vorliegenden Erfindung; und
- Fig. 5: ein schematisches Blockschaltbild zum Erläutern eines Datenspeichermediums gemäß einer weiteren Ausführungsform der vorliegenden Erfindung.

In sämtlichen Figuren sind gleiche bzw. funktionsgleiche Elemente und Vorrichtungen - sofern nicht anders angegeben ist
- mit denselben Bezugszeichen versehen worden. Die Bezeichnung und Nummerierung der Verfahrensschritte impliziert nicht zwangsläufig eine Reihenfolge, sondern dient der besseren Unterscheidung, obwohl in einigen Varianten die Reihenfolge auch der Reihenfolge der Nummerierung entsprechen kann.

### Detaillierte Beschreibung der Figuren

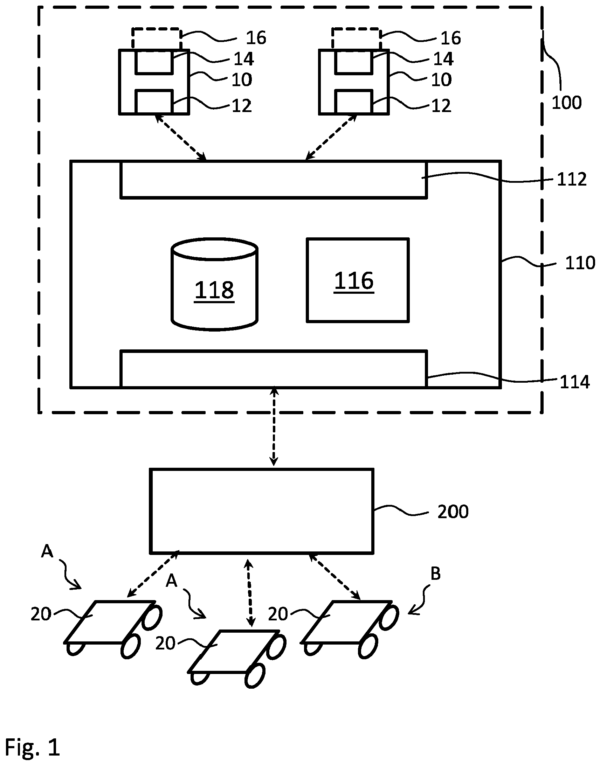

Fig. 1 zeigt ein schematisches Blockdiagramm zum Erläutern eines Ladegeräte-Managementsystems, LMS 100, gemäß einer Ausführungsform der vorliegenden Erfindung. Das Ladegeräte-Managementsystem, LMS 100, umfasst eine zentrale Recheneinrichtung, ZRE 110, welche bevorzugt als eine cloud-basierte Recheneinrichtung ausgebildet ist. Somit muss die zentrale Recheneinrichtung, ZRE 110, nicht zwangsläufig an derselben Lokalität eingerichtet sein, an welcher sich von dem Ladegeräte-Managementsystem, LMS 100, betriebene (oder: verwaltete) Ladegeräte 10 befinden, sondern kann beispielsweise über das Internet mit den Ladegeräten 10 kommunizieren. Die zentrale Recheneinrichtung, ZRE 110, kann eine oder mehrere CPUs und/oder eine oder mehrere GPUs aufweisen.

Zur - bevorzugt bidirektionalen - Kommunikation mit den Ladegeräten 10 weist die zentrale Recheneinrichtung, ZRE 110, eine Ladegeräte-Schnittstelle, LGSS 112, auf, welche in Hardware und/oder in Software realisiert sein kann. In Fig. 1 sind die Ladegeräte 10 (beispielhaft zwei an der Zahl) als Bestandteil des Ladegeräte-Managementsystems, LMS 100, dargestellt, was aber keine Notwendigkeit darstellt, da das erfindungsgemäße LMS 100 ja insbesondere eine verbesserte Kompatibilität zwischen automatisierten mobilen Einheiten, AME 20, und Ladegeräten 10 herstellt.

In Fig. 1 sind zwei automatisierte mobile Einheiten, AME 20, gezeigt: eine erste mit einer ersten Einheitenkonfiguration A, sowie eine zweite mit einer zweiten Einheitenkonfiguration B. Die automatisierten mobile Einheiten, AME 20, werden mittels eines Mobile-Einheit-Management-Systems, MEMS 200, betrieben, insbesondere durch dieses gesteuert. Solche MEMS 200, welche mehrere AMEs 20 steuern, sind im Stand der Technik bekannt und vielfach in Lokalitäten wie z.B. Werkhallen oder Logistikzentren installiert.

In dem vorliegenden Beispiel ist das MEMS 200 vorteilhaft zum Steuern einer Mischflotte ausgebildet und eingerichtet, d.h. einer Flotte von mehreren (hier beispielhaft drei) automatisierten mobilen Einheiten, AME 20, mit unterschiedlichen Einheitenkonfigurationen A, B, womit auch unterschiedliche Soll-Ladekennlinien für die unterschiedlichen automatisierten mobilen Einheiten, AME 20, einhergehen. Die unterschiedlichen Einheitenkonfigurationen A, B können beispielsweise auf permanenten Eigenschaften wie unterschiedlichen Batterietypen, oder auch auf veränderlichen Eigenschaften wie etwa einer aktuellen maximalen Batteriekapazität, einem Alterungszustand oder dergleichen basieren.

Bei den automatisierten mobilen Einheiten, AME 20, kann es sich insbesondere um automatisierte gesteuerte Fahrzeuge (engl. "automated guided vehicles", AGV), autonome mobile Roboter (engl. "autonomous mobile robots", AMR), oder unbemannte Luftfahrzeuge (engl. "unmanned aerial vehicles", UAV, sog. Drohnen), handeln. Unter den automatisierten gesteuerten Fahrzeugen, AGVs, können sich beispielsweise Stapler-AGVs und/oder Untertisch-AGVs befinden.

Häufig stellt jeder Hersteller von automatisierten mobilen Einheiten, AME 20, ein eigenes proprietäres Mobile-Einheit-Management-System, MEMS 200, bereit; das MEMS 200 kann aber auch bereits zum Steuern von Mischflotten, d.h. von automatisierten mobilen Einheiten, AME 20, verschiedener Hersteller, eingerichtet sein.

Es versteht sich, dass das erfindungsgemäß Ladegeräte-Managementsystem, LMS 100, auch mit mehreren Mobile-Einheit-Management-Systemen, MEMS 200, interagieren kann, von denen jedes beispielsweise eine Untermenge der insgesamt an einer Lokalität, oder in einem Betrieb, oder einer sonstigen wirtschaftlichen Einheit, vorhandenen Flotte von automatisierten mobilen Einheiten, AME 20, steuert.

Die beiden Ladegeräte 10 sind vorteilhaft mit identischer Hardware ausgebildet und ausgerüstet, sodass sie prinzipiell dieselben Funktionen ausführen können oder, anders ausgedrückt, dieselben Funktionalitäten aufweisen.

Jedes Ladegerät 10 umfasst vorteilhaft ein Kommunikationsmodul 12, welches zur bidirektionalen Kommunikation mit der Ladegeräte-Schnittstelle, LGSS 112, ausgebildet ist, sowie eine Ladeelektronik 14, welche dazu ausgebildet ist, eine zu ladende automatisierte mobile Einheit, AME 20, entsprechend einer Ladekennlinie an einem Ladepunkt 16 des Ladegeräts 10 zu laden. Das Kommunikationsmodul 12 kann an dem Ladegerät 10 außen anmontiert oder angeklebt sein, oder es kann in das Ladegerät 10 integriert sein. Das Kommunikationsmodul 12 ist bevorzugt zur bidirektionalen Kommunikation mit der Ladegeräte-Schnittstelle, LGSS 112, über das Internet eingerichtet.

Das Ladegeräte-Managementsystem, LMS 100, weist außerdem eine Ladeanfrage-Schnittstelle, LASS 114, auf, mittels welcher eine - bevorzugt bidirektionale - Kommunikation mit dem Mobile-Einheit-Management-System, MEMS 200, durchführbar ist. Insbesondere ist die Ladeanfrage-Schnittstelle, LASS 114, dazu eingerichtet, zumindest eine Ladeanfrage sowie einen Datensatz bezüglich einer beliebigen zu ladenden automatisierten mobilen Einheit, AME 20, einer Mehrzahl von AMEs 20, welche zumindest teilweise unterschiedliche Soll-Ladekennlinien aufweisen, zu erhalten. Die Ladeanfrage kann hierbei insbesondere von dem MEMS 200 an die Ladeanfrage-Schnittstelle, LASS 114, übermittelt werden bzw. durch die LASS 114 von dem MEMS 200 empfangen werden. Die Ladeanfrage kann dabei von dem MEMS 200 und/oder von der AME 20 ausgehen.

Das Ladegeräte-Managementsystem, LMS 100, weist außerdem ein Steuermodul 116 auf. Das Steuermodul 116 ist dazu eingerichtet, Steueranweisungen basierend auf dem empfangenen Datensatz zu erzeugen und mittels der Ladegeräte-Schnittstelle, LGSS 112, an ein Ladegerät 10 zu übermitteln, um das entsprechende Ladegerät 10 zu steuern, die zu ladende automatisierte mobile Einheit, AME 20, gemäß einer Soll-Ladekennlinie der zu ladenden automatisierten mobilen Einheit, AME 20, zu laden.

Wie bereits erwähnt, gibt es eine Vielzahl von Möglichkeiten, mittels des Steuermoduls 116 die Soll-Ladekennlinie, mit welcher die automatisierte mobile Einheit, AME 20, zu laden ist, bestimmt werden kann.

Der an der Ladeanfrage-Schnittstelle, LASS 114, empfangene Datensatz kann beispielsweise einen Identifikationscode, ID, der zu ladenden automatisierten mobilen Einheit, AME 20, umfassen. Die zentrale Recheneinrichtung, ZRE 110, kann eine Ladekennlinien-Datenbank, LKDB 118, aufweisen, welche den Identifikationscode, ID, einer jeden AME 20 der Mehrzahl von AMEs 20 mindestens einer zugehörigen Soll-Ladekennlinie zuordnet. Bevorzugt weist jede AME 20 einen individuellen (d.h. nur einmal innerhalb der von dem Mobile-Einheit-Management-System 200 gesteuerten Flotte) Identifikationscode, ID, auf. Jedem solchen individuellen Identifikationscode, ID, ist dann durch die Ladekennlinien-Datenbank, LKDB 118, mindestens eine Soll-Ladekennlinie (bevorzugt genau eine Soll-Ladekennlinie) zugeordnet. Bei dem Identifikationscode, ID, kann es sich um dieselbe Identifikation handeln, mittels welcher das Mobile-Einheit-Management-System 200 zwischen den verschiedenen AMEs 20 unterscheidet.

Alternativ kann aber auch (nur) für jede Einheitenkonfiguration A, B ein Identifikationscode, ID, vorgesehen sein, da unterschiedliche automatisierte mobile Einheiten, AME 20, mit derselben Einheitenkonfiguration A, B üblicherweise dieselben Soll-Ladekennlinien aufweisen. Dementsprechend kann die Ladekennlinien-Datenbank 118 jedem solchen Identifikationscode, ID, oder, damit gleichbedeutend, jeder vorhandenen Einheitenkonfiguration A, B mindestens eine (bevorzugt: genau eine) Soll-Ladekennlinie zuordnen. Im Folgenden wird im Wesentlichen nur noch von einer einzelnen Soll-Ladekennlinie die Rede sein; hierbei versteht es sich, dass es sich dabei auch um mehrere handeln kann, von denen durch das Steuermodul 116 (oder auch durch das Ladegerät 10) eine ausgewählt wird.

Die Ladekennlinien-Datenbank, LKDB 118, kann individuell programmiert sein. Die Ladekennlinien-Datenbank, LKDB 118, kann aber auch für eine Mehrzahl von Herstellern, oder auch für sämtliche Hersteller, Einträge aufweisen, welche den von diesen Herstellern verwendeten Identifikationscodes, ID, entsprechende Soll-Ladekennlinien zuweisen. Ein Verwender des erfindungsgemäßen Ladegeräte-Managementsystem 100 braucht sich daher nur um das Einpflegen einer jeden neuen automatisierten mobilen Einheit, AME 20, in das zugehörige Mobile-Einheit-Management-System 200 kümmern, braucht aber keinen Zusatzaufwand bezüglich des Ladegeräte-Managementsystem 100 zu treiben.

Beispielhaft kann der Identifikationscode, ID, z.B. eine individuelle Seriennummer der zu ladenden automatisierten mobilen Einheit, AME 20, und/oder eine Typennummer der zu ladenden AME 20 aufweisen oder daraus bestehen.

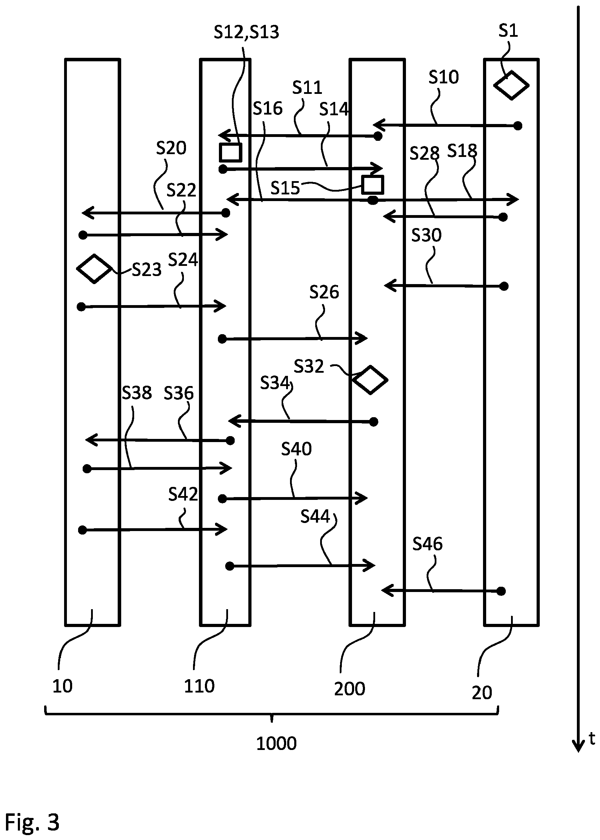

Das Steuermodul 116 kann dazu eingerichtet sein, die Steueranweisungen unter Verwendung der mindestens einen Soll-Ladekennlinie aus der Ladekennlinien-Datenbank, LKDB 118, welche dem empfangenen Identifikationscode, ID, zugeordnet ist, zu erzeugen. Über die Ladegeräte-Schnittstelle, LGS 112, empfängt eines der Ladegeräte 10 die Steueranweisungen und führt daraufhin das Laden der automatisierten mobilen Einheit, AME 20, durch, wobei die endgültige Freigabe des Ladens von zusätzlichen Bedingungen abhängen kann (siehe hierzu insbesondere Fig. 3 und die zugehörige Beschreibung). Insbesondere kann das Steuermodul 116 dazu eingerichtet sein, das Laden der zu ladenden AME 20 nur dann freizugeben, wenn von der Ladeanfrage-Schnittstelle, LASS 114, eine Freigabe durch das Mobile-Einheit-Management-System, MEMS 200, empfangen wird. Die Freigabe kann beispielsweise indizieren, dass (oder, anders ausgedrückt, nur dann erteilt werden, falls) sich die zu ladende AME 20 an einem jeweiligen Ladepunkt 16 des entsprechenden Ladegeräts 10 befindet.

Welchem der Ladegeräte 10 die Steueranweisungen übermittelt werden (und damit: welches Ladegerät 10 das Laden durchführen soll), kann durch das Ladegeräte-Managementsystem, LMS 100, bestimmt werden. Vorteilhaft wird dies jedoch durch das Mobile-Einheit-Management-System, MEMS 200, bestimmt, wobei dieses Bestimmen wiederum auf Informationen des Ladegeräte-Managementsystems, LMS 100, an das Mobile-Einheit-Management-System 200 abhängen kann.

Das Bestimmen des zu verwendenden Ladegeräts 10 durch das Mobile-Einheit-Management-System, MEMS 200, ist insbesondere deswegen vorteilhaft, weil das MEMS 200 die Position aller Ladegeräte 10 kennt (um die AMEs 20 jeweils dort hin steuern zu können) oder zumindest anfragen kann oder regelmäßig anfragt, und somit unter den verfügbaren Ladegeräten 10 das am günstigsten gelegene auswählen kann.

Verfügbare Ladegeräte 10 können entweder alle vorhandenen Ladegeräte 10 sein, oder es kann sich dabei um eine Auswahl der vorhandenen Ladegeräte 10 handeln, welche durch das Ladegeräte-Managementsystem, LMS 100, getroffen wurde. Diese Auswahl kann beispielsweise auf Funktionalitäten und/oder temporären Eigenschaften der Ladegeräte 10 basieren. Beispielsweise ist es möglich, dass nicht sämtliche Ladegeräte 10 sämtliche Ladekennlinien ausführen können (d.h. dass nicht alle Ladegeräte 10 dieselbe Funktionalität aufweisen). Es ist auch möglich, dass einige Ladegeräte 10 temporär deaktiviert sind (z.B. aufgrund von Fehlerzuständen wie etwa Überhitzung oder aufgrund von Wartungen).

Alternativ zu der Lösung mit den Identifikationscodes, ID, kann auch vorgesehen sein, dass der Datensatz mindestens eine Soll-Ladekennlinie für die zu ladende automatisierte mobile Einheit, AME 20, umfasst. Somit braucht das Steuermodul 116 in dieser Variante die Soll-Ladekennlinie lediglich aus dem Datensatz auszulesen und darauf basierend die Steueranweisungen zu erzeugen.

Das Ladegeräte-Managementsystem, LMS 100, kann in manchen Varianten auch das Mobile-Einheit-Management-System, MEMS 200, und/oder die Mehrzahl von automatisierten mobilen Einheiten, AME 20, umfassen. Das MEMS 200 kann auch als die AMEs 20 umfassend angesehen werden.

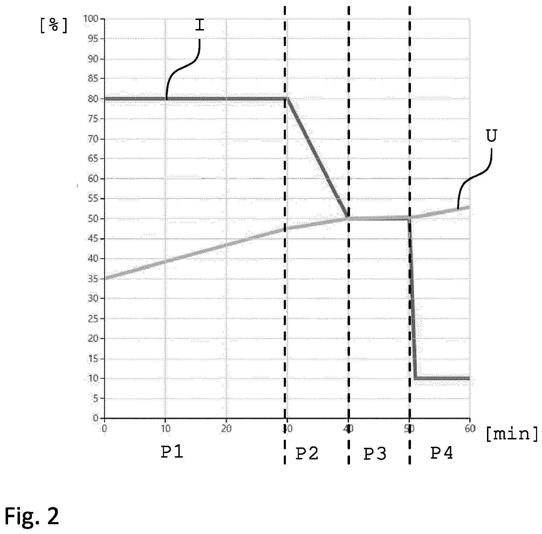

Fig. 2 zeigt eine beispielhafte Ladekennlinie zur Verwendung in dem Ladegeräte-Managementsystem, LMS 100, gemäß Fig. 1. Jeweils in Ampere bzw. Volt (vertikale Achse) wird angezeigt, wie sich die von dem Ladegerät 10 ausgegebene Spannung U und die ausgegebene Stromstärke I im Verlauf der Zeit (horizontale Achse, hier beispielhaft in Minuten) verändern. Die gezeigten Werte sind lediglich beispielhaft, als Batterie der automatisierten mobilen Einheit, AME 20, ist hier eine Lithium-Ionen-Batterie angenommen. Deutlich erkennbar ist, dass die Ladekennlinie vier Phasen P1, P2, P3, P4 unterscheidet, welche durch verschiedene Schwellwerte bezüglich des Ladezustands (engl. "state of charge", SOC) der Batterie der AME 20 definiert werden. Hieraus ist auch ersichtlich, wie wichtig das Laden jeder AME 20 mit einer für diese AME 20 optimalen (oder: optimierten) Ladekennlinie ist.

Fig. 3 zeigt ein schematisches Ablaufdiagramm zum Erläutern eines Verfahrens gemäß einer weiteren Ausführungsform der vorliegenden Erfindung.

Das Verfahren ist insbesondere mit dem erfindungsgemäßen Ladegeräte-Managementsystem, LMS 100, durchführbar. Somit ist das Verfahren gemäß allen in Bezug auf das erfindungsgemäße Ladegeräte-Managementsystem, LMS 100, beschriebenen Varianten, Optionen, Modifikationen und Ausführungsformen anpassbar und umgekehrt. Anders ausgedrückt, können die Elemente des Ladegeräte-Managementsystems, LMS 100, insbesondere das Steuermodul 116, so eingerichtet sein, dass sie das anhand von Fig. 3 beschriebene Verfahren ganz oder teilweise umsetzen.

Fig. 3 ist von oben nach unten entlang einer Zeitachse t zu lesen. Auch wenn mitunter einige Verfahrensschritte in anderer Reihenfolge durchgeführt werden könnten, ist die dargestellte zeitliche Reihenfolge bevorzugt. Verfahrensschritte, die als gleichzeitig dargestellt werden, können tatsächlich gleichzeitig oder in einer beliebigen Reihenfolge durchgeführt werden. Die Verfahrensschritte werden entweder durch Pfeile (Übertragung/Empfang eines Signals), liegende Quadrate (Berechnungsschritte) oder auf der Spitze stehende Rauten (Entscheidungen) dargestellt, wobei die Formen dem besseren Verständnis dienen und nicht einschränkend verstanden werden sollen.

Die vier handelnden Entitäten (Ladegerät 10, Ladegeräte-Managementsystem, LMS 100, Mobile-Einheit-Management-System, MEMS 200, und automatisierte mobile Einheit, AME 20) sind als senkrechte Balken dargestellt, um den Signalaustausch zu verdeutlichen. Es versteht sich, dass insbesondere eine Vielzahl von Ladegeräten 10 und eine Vielzahl von automatisierten mobilen Einheiten, AME 20, vorhanden und mittels des Verfahrens betrieben werden können. Dabei verhält sich jedes beliebige Ladegeräte 10 und jede beliebige AME 20 wie in Fig. 3 gezeigt.

Zum besseren Verständnis werden anhand von Fig. 3 auch solche Verfahrensschritte erläutert werden, welche nicht zwangsläufig durch das erfindungsgemäße Ladegeräte-Managementsystem 100 selbst durchgeführt werden, und welche auch nicht zwingend notwendige Bestandteile des erfindungsgemäßen Verfahrens sind. In einer Ausführungsform umfasst das Verfahren sämtliche Verfahrensschritte, die durch das Ladegeräte-Managementsystem, LMS 100, durchgeführt werden. In einer weiteren Ausführungsform umfasst das Verfahren sämtliche Verfahrensschritte, die durch das Ladegeräte-Managementsystem, LMS 100, sowie das (bzw. ein) Ladegerät 10 durchgeführt werden. In einer weiteren Ausführungsform umfasst das Verfahren sämtliche Verfahrensschritte, die durch das Ladegeräte-Managementsystem, LMS 100, das (bzw. ein) Ladegerät 10, sowie das Mobile-Einheit-Management-System, MEMS 200, durchgeführt werden. In einer weiteren Ausführungsform umfasst das Verfahren sämtliche in Fig. 3 gezeigten Verfahrensschritte. Es versteht sich außerdem, dass ein Übermitteln eines Signals von X and Y stets ein Empfangen des Signals durch Y von X umfasst bzw. damit gleichbedeutend ist.

Die Erfindung schafft auch eine Gesamt-Steuerumgebung 1000, welche das erfindungsgemäße Ladegeräte-Managementsystem 100, die Ladegeräte 10, das Mobile-Einheit-Management-System 200 sowie optional die automatisierten mobilen Einheiten, AME 20, umfasst. Eine solche Gesamt-Steuerumgebung 1000 kann vorteilhaft dazu dienen, das Verfahren mit sämtlichen mit Bezug auf Fig. 3 beschriebenen Verfahrensschritte durchzuführen.

Das Verfahren beginnt damit, dass in einem Schritt S1 eine automatisierte mobile Einheit, AME 20, feststellt, dass ihr Ladezustand (gemäß einem vorbestimmten Schwellwert) niedrig ist und daher eine Ladung durchgeführt werden sollte.

In einem Schritt S10 empfängt ein Mobile-Einheit-Management-System, MEMS 200, welches unter anderem diese AME 20 verwaltet (insbesondere steuert), diese Information von der automatisierten mobilen Einheit, AME 20, (d.h. die AME 20 übermittelt diese Information). Je nach Einstellung des Mobile-Einheit-Management-Systems, MEMS 200, kann hierbei zusätzlich auch eine Information über einen Typ oder eine Einheitenkonfiguration der AME 20 (bevorzugt ein Identifikationscode wie im Voranstehenden beschrieben, also beispielsweise eine Seriennummer und/oder eine Typennummer), eine Position der AME 20 und/oder der Ladezustand der AME 20 übermittelt werden.

In einem Schritt S11 empfängt das Ladegeräte-Managementsystem, LMS 100, (beispielsweise über die Ladeanfrage-Schnittstelle, LASS 114, wie im Vorangehenden beschrieben) eine Ladeanfrage, hier von dem Mobile-Einheit-Management-System, MEMS 200. Diese Ladeanfrage umfasst beispielhaft zumindest eine Information über den Typ der zu ladenden automatisierten mobilen Einheit, AME 20, beispielsweise den Identifikationscode, ID, wie im Vorangehenden beschrieben. Die Ladeanfrage informiert somit das Ladegeräte-Managementsystem, LMS 100, dass ein passendes Ladegeräte 10 für eine AME 20 des genannten Typs gesucht wird.

In einem Schritt S12 ermittelt das Ladegeräte-Managementsystem, LMS 100, basierend auf der Information über den Typ, z.B. aus dem Identifikationscode, eine zugehörige Soll-Ladekennlinie für die zu ladende AME 20. Dies kann beispielsweise mithilfe eines Steuermoduls 116 und/oder einer Ladekennlinien-Datenbank, LKDB 118, des LMS 100 erfolgen, wie im Vorangehenden beschrieben wurde. Falls das LMS 100 die Soll-Ladekennlinie bereits von dem Mobile-Einheit-Management-System, MEMS 200, empfangen hat, kann diese Soll-Ladekennlinie in dem Schritt S12 auch aus dem entsprechenden empfangenen Datenpaket extrahiert und somit auf diese Weise ermittelt werden. In einem Schritt S13 ermittelt das Ladegeräte-Managementsystem, LMS 100, (insbesondere dessen Steuermodul 116) diejenigen Ladegeräte 10, welche ein Laden gemäß der in Schritt S12 ermittelten Soll-Ladekennlinie durchführen können und welche damit für das Laden in Reaktion auf die Ladeanfrage zur Verfügung stehen.

In einem Schritt S14 übermittelt das Ladegeräte-Managementsystem, LMS 100, an das Mobile-Einheit-Management-System, MEMS 200, eine Information, welche Ladegeräte 10 zur Verfügung stehen. Sofern aktuell keine Ladegeräte 10 zur Verfügung stehen, kann eine Warteprozedur etabliert werden. Hierzu kann dem MEMS 200 durch das LMS 100 mitgeteilt werden, dass aktuell keine Ladegeräte 10 zur Verfügung stehen. Das MEMS 200 kann daraufhin die zu ladende AME 20 in eine günstige Warteposition steuern, beispielsweise eine Position, welche von allen potenziellen Ladegeräten 10 gleich weit entfernt ist. Sobald ein Ladegerät 10 verfügbar wird, wird Schritt S14 durchgeführt. Die verfügbaren Ladegeräte 10 werden dem MEMS 200 anhand von Ladegerät-Kennungen mitgeteilt, welche sowohl dem LMS 100 und dem MEMS 200 bekannt sind.

In einem Schritt S15 entscheidet das Mobile-Einheit-Management-System, MEMS 200, welches der zur Verfügung stehenden Ladegeräte 10 zum Laden verwendet werden soll, beispielsweise basierend auf der Position der Ladegeräte 10 sowie eines Einsatzplanes für die zu ladende AME 20. Das MEMS 200 kann hierfür eine Datenbank aufweisen, welche jeder Ladegerät-Kennung eine Position zuweist, welche dem Ladepunkt 16 des Ladegeräts 10 mit dieser Ladegerät-Kennung entspricht. Somit kann das Ladegerät 10 etwa danach ausgewählt werden, dass die AME 20 zum Laden an dem ausgewählten Ladegerät 10 einen möglichst geringen Umweg zwischen zwei Positionen gemäß ihrem Einsatzplan fährt.

In einem Schritt S16 empfängt das Ladegeräte-Managementsystem, LMS 100, die Anweisung, welches Ladegerät 10 verwendet werden soll.

In einem Schritt S18 übermittelt das Mobile-Einheit-Management-System, MEMS 200, ein Steuersignal an die zu ladende automatisierte mobile Einheit, AME 20, welches die AME 20 steuert, das zu verwendende Ladegerät 10 (genauer gesagt: die der Ladegerät-Kennung des ausgewählten Ladegeräts 10 zugewiesene Position, d.h. den Ladepunkt 16) anzufahren und dort zu laden.

In einem Schritt S20 übermittelt das Ladegeräte-Managementsystem, LMS 10, die in dem Schritt S12 ermittelte Soll-Ladekennlinie im Rahmen von Steueranweisungen an das zu verwendende Ladegerät 10. In diesem Schritt S20 kann das Ladegerät 10 im Rahmen der Steueranweisungen auch angewiesen werden, das Laden durchzuführen, sobald es möglich ist, oder aber, eine vorbestimmte Bedingung, z.B. eine Freigabe, abzuwarten. Das erfindungsgemäße Verfahren kann somit auch das Laden der automatisierten mobilen Einheit, AME 20, umfassen. Vorliegend wird eine Variante erläutert, bei der zunächst eine Sicherheitsprüfung durchgeführt wird, die entweder in einer Freigabe endet oder nicht. In dieser Variante weist das LMS 100 daher das Ladegerät 10 im Rahmen der Steueranweisungen an, auf die Freigabe zu warten, sofern nicht die Ladegeräte 10 bereits grundsätzlich so eingerichtet sind, dass sie immer auf die entsprechende Freigabe warten.

In einem optionalen Schritt S22 bestätigt das Ladegerät 10 dem Ladegeräte-Managementsystem, LMS 100, dass die gewünschte Soll-Ladekennlinie ausgewählt wurde und das Ladegerät 10 auf die Freigabe sowie die Ankunft der automatisierten mobilen Einheit, AME 20, wartet.

Als Reaktion auf den Schritt S18 empfängt das Mobile-Einheit-Management-System, MEMS 200, in einem optionalen Schritt S28 eine Bestätigung von der automatisierten mobilen Einheit, AME 20 (bzw. die AME 20 übermittelt diese Bestätigung als Reaktion), dass die AME 20 zu dem angewiesenen (d.h. zu verwendenden) Ladegerät 10 unterwegs ist und/oder bestätigt die Position dessen Ladepunkts 16 als Ziel.

Sobald die automatisierte mobile Einheit, AME 20, bei dem angewiesenen Ladegerät 10 (genauer: an dessen Ladepunkt 16) angekommen ist, empfängt das Mobile-Einheit-Management-System, MEMS 200, in einem Schritt S30 eine Information, dass die AME 20 an der Position des angewiesenen Ladegeräts 10 angekommen ist und dort zur Ladung bereitsteht, bzw. die AME 20 übermittelt diese Information.

Wenn die automatisierte mobile Einheit, AME 20, an dem Ladepunkt 16 des Ladegeräts 10 angekommen ist, stellt das Ladegerät 10 in einem Schritt S23 fest, dass eine Batterie an seiner Ladeelektronik 14 angeschlossen ist. Daraufhin übermittelt es in einem Schritt S24 eine Information an das Ladegeräte-Managementsystem, LMS 100, dass eine Batterie an dem Ladegerät 10 angeschlossen ist. Das LMS 100 wiederum übermittelt in einem Schritt S26 an das Mobile-Einheit-Management-System, MEMS 200, eine Information, dass eine AME 20 an dem Ladegerät 10 angeschlossen ist, wobei es eine Ladegeräte-Kennung des Ladegeräts 10 übermitteln kann.

In einem Schritt S32 führt das Mobile-Einheit-Management-System, MEMS 200, nun eine Sicherheitsüberprüfung durch. In einem ersten Teilschritt wird geprüft, ob die Position der AME 20 bei Durchführung des Schritts S30 der dem MEMS 200 bekannten Position des ausgewählten, zu verwendenden Ladegeräts 10 (d.h. dessen Ladepunkts 16) entspricht. In einem zweiten Teilschritt wird geprüft, ob die in Schritt S26 von dem LMS 100 empfangende Ladegeräte-Kennung der Ladegeräte-Kennung des ausgewählten Ladegeräts 10 entspricht. Falls beide Prüfungen mit einem positiven Ergebnis enden (und nur dann), wird in einem Schritt S34 durch das MEMS 200 an das LMS 100 übermittelt, dass eine Freigabe für das Laden besteht. Endet mindestens eine der beiden Prüfungen in den Teilschritten mit einem negativen Ergebnis, kann eine Fehlerprozedur durchgeführt werden, beispielsweise können die Schritte S18, S28, S30 erneut durchgeführt werden und/oder ein Warnsignal an eine Überwachungsperson abgesetzt werden.

Hat das Ladegeräte-Managementsystem, LMS 100, in dem Schritt S34 die Freigabe erhalten, gibt sie diese in einem Schritt S36 an das Ladegerät 10 weiter. Das Ladegerät 10 beginnt daraufhin in einem Schritt S38 und meldet den Status "Ladung läuft" an das LMS 100. Das LMS 100 wiederum kann in einem Schritt S40 dem Mobile-Einheit-Management-System, MEMS 200, ebenfalls melden, dass die Ladung läuft.

Wenn die Ladung abgeschlossen ist, kann dies durch das Ladegerät 10 und/oder die automatisierte mobile Einheit, AME 20, festgestellt werden. Beispielsweise kann das Ladegerät dies anhand der Ladekennlinie feststellen, und/oder die AME 20 anhand ihres Ladezustands. Das Ladegeräte-Managementsystem, LMS 100, kann in einem Schritt S42 eine Information von dem Ladegerät 10 erhalten, dass das Laden abgeschlossen ist, und dies in einem Schritt S44 an das Mobile-Einheit-Management-System, MEMS 200, melden. Alternativ und/oder zusätzlich kann das MEMS 200 eine Information, dass das Laden abgeschlossen wurde, auch in einem Schritt S46 von der AME 20 erhalten. Sofern beide Schritte, S44 und S46, vorgesehen sind, kann das MEMS 200 daraufhin den erfolgreichen Abschluss des Verfahrens feststellen.

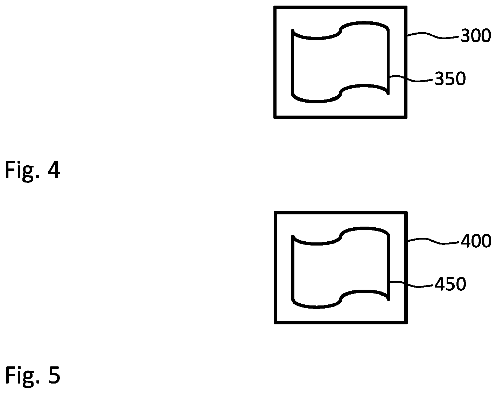

Fig. 4 zeigt ein schematisches Blockschaltbild zum Erläutern eines Computerprogrammprodukts 300 gemäß einer weiteren Ausführungsform der vorliegenden Erfindung. Das Computerprogrammprodukt 300 umfasst ausführbaren Programmcode 350, welche dazu eingerichtet ist, wenn er ausgeführt wird, das erfindungsgemäße Verfahren durchzuführen.

Fig. 5 zeigt ein schematisches Blockschaltbild zum Erläutern eines computerlesbaren, nicht-flüchtigen Datenspeichermediums 400 gemäß einer weiteren Ausführungsform der vorliegenden Erfindung. Das Datenspeichermedium 400 umfasst ausführbaren Programmcode 450, welche dazu eingerichtet ist, wenn er ausgeführt wird, das erfindungsgemäße Verfahren durchzuführen.

Der vorliegenden Erfindung liegt die Erkenntnis zugrunde, dass eine Flotte von automatisierten mobilen Einheiten, AME 20, mit verschiedensten Einheitenkonfigurationen, mit einem einzelnen Ladegerät 10 oder einer geringen Anzahl von (idealerweise gleich ausgebildeten) Ladegeräten 10 geladen werden kann, wenn das erfindungsgemäße Ladegeräte-Managementsystem, LMS 100, die jeweils zugehörigen (oder: optimalen) Soll-Ladekennlinien ermittelt und die Ladegeräte 10 entsprechend ansteuert.

Die Erfindung wurde anhand konkreter Ausführungsformen und Figuren beschrieben, ist jedoch nicht auf diese beschränkt.

## Patentansprüche

1. Ladegeräte-Managementsystem, LMS (100), umfassend:
eine zentrale Recheneinrichtung, ZRE (110), umfassend zumindest eine Ladeanfrage-Schnittstelle, LASS (114), ein Steuermodul (116) und eine Ladegeräte-Schnittstelle, LGSS (112) ;
wobei die Ladeanfrage-Schnittstelle, LASS (114), dazu eingerichtet ist, zumindest eine Ladeanfrage sowie einen Datensatz bezüglich einer beliebigen zu ladenden automatisierten mobilen Einheit, AME (20), einer Mehrzahl von automatisierten mobilen Einheiten, AME (20), welche zumindest teilweise unterschiedliche Soll-Ladekennlinien aufweisen, zu empfangen;
wobei das Steuermodul (116) dazu eingerichtet ist, Steueranweisungen basierend auf dem empfangenen Datensatz zu erzeugen und mittels der Ladegeräte-Schnittstelle, LGSS (112), an ein Ladegerät (10) zu übermitteln, um das entsprechende Ladegerät (10) zu steuern, die zu ladende automatisierte mobile Einheit, AME (20), gemäß einer Soll-Ladekennlinie der zu ladenden automatisierten mobilen Einheit, AME (20), zu laden.

2. Ladegeräte-Managementsystem, LMS (100), nach Anspruch 1, wobei die Ladeanfrage-Schnittstelle, LASS (114), dazu ausgebildet ist, die Ladeanfrage sowie den Datensatz von einem Mobile-Einheit-Management-System, MEMS (200) zu erhalten, welches dazu eingerichtet ist, die Mehrzahl von automatisierten mobilen Einheiten, AEM (20) zu steuern.

3. Ladegeräte-Managementsystem, LMS (100), nach Anspruch 1 oder 2, wobei der Datensatz einen Identifikationscode, ID, der zu ladenden automatisierten mobilen Einheit, AME (20), aufweist, und wobei die zentrale Recheneinrichtung, ZRE (110), weiterhin eine Ladekennlinien-Datenbank, LKDB (118), aufweist, welche den Identifikationscode, ID, einer jeden der Mehrzahl von automatisierten mobilen Einheiten, AME (20), mindestens einer zugehörigen Soll-Ladekennlinie zuordnet, und wobei das Steuermodul (116) dazu eingerichtet ist, die Steueranweisungen unter Verwendung der mindestens einen Soll-Ladekennlinie aus der Ladekennlinie-Datenbank (118) zu erzeugen.

4. Ladegeräte-Managementsystem, LMS (100), nach Anspruch 3, wobei der Identifikationscode eine individuelle Seriennummer der zu ladenden automatisierten mobilen Einheit, AME (20), und/oder eine Typennummer der zu ladenden automatisierten mobilen Einheit, AME (20), aufweist.

5. Ladegeräte-Managementsystem, LMS (100), nach einem der Ansprüche 1 oder 2,
wobei der Datensatz mindestens eine Soll-Ladekennlinie für die zu ladenden automatisierte mobile Einheit, AME (20), umfasst, und wobei das Steuermodul (116) dazu eingerichtet ist, die Steueranweisungen unter Verwendung der mindestens einen Soll-Ladekennlinie aus dem Datensatz zu erzeugen.

6. Ladegeräte-Managementsystem, LMS (100), nach einem der Ansprüche 1 bis 5,
wobei das Steuermodul (116) dazu eingerichtet ist, das Laden der zu ladenden automatisierten mobilen Einheit, AME (20), nur dann freizugeben, wenn eine Freigabe des Mobile-Einheit-Management-System, MEMS (200) dazu, empfangen wird, wobei die Freigabe optional insbesondere indiziert, dass sich die zu ladende automatisierte mobile Einheit, AME (20), an einem Ladepunkt (16) des Ladegeräts (10) befindet.

7. Ladegeräte-Managementsystem, LMS (100), nach einem der Ansprüche 1 bis 6,
wobei das Steuermodul (116) dazu eingerichtet ist, aus mehreren Soll-Ladekennlinien für die zu ladende automatisierte mobile Einheit, AME (20), eine auszuwählen und basierend auf dieser die Steueranweisungen zu erzeugen.

8. Ladegeräte-Managementsystem, LMS (100), nach einem der Ansprüche 1 bis 7, umfassend mindestens ein Ladegerät (10) mit einem Kommunikationsmodul (12), welches zur bidirektionalen Kommunikation mit der Ladegeräte-Schnittstelle, LGSS (112), der zentralen Recheneinrichtung, ZRE (110), ausgebildet ist sowie mit einer Ladeelektronik (14), welche dazu ausgebildet ist, eine zu ladende automatisierte mobile Einheit, AME (20), basierend auf den von der Ladegeräte-Schnittstelle, LGSS (112), empfangenen Steueranweisungen zu laden.

9. Ladegeräte-Managementsystem, LMS (100), nach Anspruch 8, umfassend eine Mehrzahl von hardwaremäßig gleich ausgebildeten Ladegeräten (10), welche jeweils in der Lage sind, ein Laden gemäß jeder der unterschiedlichen Soll-Ladekennlinien der Mehrzahl von automatisierten mobilen Einheiten, AME (20), bereitzustellen.

10. Ladegeräte-Managementsystem, LMS (100), nach einem der Ansprüche 1 bis 9, wobei die zentrale Recheneinrichtung, ZRE, als ein Server, insbesondere cloud-basiert, implementiert ist.

11. Verfahren zum Betreiben mindestens eines Ladegerätes, umfassend zumindest die Schritte:
Empfangen (S11) einer Ladeanfrage sowie eines Datensatzes bezüglich einer beliebigen zu ladenden automatisierten mobilen Einheit, AME (20), einer Mehrzahl von automatisierten mobilen Einheiten, AME (20), welche zumindest teilweise unterschiedliche Soll-Ladekennlinien aufweisen;
Ermitteln (S12) einer Soll-Ladekennlinie für das Laden der zu ladenden automatisierten mobilen Einheit, AME (20) basierend auf dem empfangenen Datensatz; und
Steuern (S20) eines Ladegeräts (10) zum Laden der zu ladenden automatisierten mobile Einheit, AME (20), gemäß der ermittelten Soll-Ladekennlinie.

12. Verfahren nach Anspruch 11,
wobei die Ladeanfrage und der Datensatz von einem Mobile-Einheit-Management-Systems, MEMS (200), empfangen werden, welches die Mehrzahl von automatisierten mobilen Einheiten, AME (20) steuert.

13. Verfahren nach Anspruch 11 oder 12, wobei der Datensatz einen Identifikationscode, ID, der zu ladenden automatisierten mobilen Einheit, AME (20), aufweist, und wobei das Ermitteln (S12) der Soll-Ladekennlinie unter Verwendung einer Ladekennlinien-Datenbank, LKDB (118), erfolgt, welche den Identifikationscode, ID, einer jeden der Mehrzahl von automatisierten mobilen Einheiten, AME (20), mindestens einer zugehörigen Soll-Ladekennlinie zuordnet.

14. Verfahren nach einem der Ansprüche 11 bis 13, wobei mindestens eine automatisierte mobile Einheit, AME (20), der Mehrzahl von automatisierten mobilen Einheiten, AME (20), als ein automatisiertes gesteuertes Fahrzeug, als ein autonomer mobiler Roboter, oder als ein unbemanntes Luftfahrzeug ausgebildet ist.

15. Computerprogrammprodukt (300), umfassend ausführbaren Programmcode (350), welche dazu eingerichtet ist, wenn er ausgeführt wird, das Verfahren gemäß einem der Patentansprüche 11 bis 13 durchzuführen.
